(19) Europäisches Patentamt
European Patent Office
Office européen des brevets

(11) Publication number: 0 190 256
B1

(12) # EUROPEAN PATENT SPECIFICATION

(45) Date of publication of patent specification: **16.01.91**

(51) Int. Cl.$^5$: **C 09 K 5/00**

(21) Application number: **85903911.7**

(22) Date of filing: **22.07.85**

(86) International application number: **PCT/US85/01368**

(87) International publication number: **WO 86/00919 13.02.86 Gazette 86/04**

(54) **OIL-IN-ALCOHOL MICROEMULSIONS IN ANTIFREEZE.**

(30) Priority: **23.07.84 US 633207**
**12.12.84 US 680756**
**16.07.85 US 754732**

(43) Date of publication of application:
**13.08.86 Bulletin 86/33**

(45) Publication of the grant of the patent:
**16.01.91 Bulletin 91/03**

(84) Designated Contracting States:
**DE FR GB IT SE**

(56) References cited:
**FR-A-1 126 418**
**GB-A- 802 347**
**GB-A- 962 351**
**GB-A-1 044 678**
**US-A-2 150 936**
**US-A-3 057 799**
**US-A-3 432 437**
**US-A-4 371 447**

(73) Proprietor: **First Brands Corporation**
**39 Old Ridgebury Road, J-1392**
**Danbury, CT 06817-0001 (US)**

(72) Inventor: **GODDARD, Errol, Desmond**
**349 Pleasant Lane**
**Haworth, NJ 07641 (US)**
Inventor: **HAACK, John, Lee**
**17 Dunnings Drive**
**Elmsford, NY 10523 (US)**
Inventor: **LEUNG, Pak, Sang**
**15 Woodland Road**
**Highland Mills, NY 10930 (US)**

(74) Representative: **Freiherr von Pechmann, Eckehart et al**
**Wuesthoff & Wuesthoff Patent- und Rechtsanwälte Schweigerstrasse 2**
**D-8000 München 90 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 190 256 B1

## Description

### Field of the invention

The present invention relates generally to an antifreeze concentrate, and, more particularly, to an antifreeze concentrate containing an oil-in-alcohol microemulsion.

### Background of the invention

Macroemulsions for use in antifreezes are well-known in the art. For example, ethylene glycol antifreeze compositions containing mineral oil plus an emulsifier or containing a barium sulfonate oil are well-known and were used commercially in automobiles up until the mid-1960's. The oil in these antifreezes provided excellent corrosion inhibition for the antifreezes by coating the metal surfaces of the coolant system with a so-called "magnetic film". However, in concentrate form, these emulsions are generally phase stable only for a very short period of time, e.g., perhaps two days or less, after which time they tend to separate into two phases.

With the advent of antifreeze overflow-tanks used to hold the volume expansion of antifreeze in a hot engine coolant system, these rather unstable macroemulsion antifreezes were replaced with other types of antifreezes, since a macroscopic two-phase antifreeze tends to congregate the less dense oil phase in the overflow-tank thereby depriving the remaining parts of the cooling system of this corrosion-inhibiting component. For the above described reasons, the concept of macroscopic two-phase antifreezes is obsolete and current antifreezes are single phase, most notably the silicon-silicate stabilized antifreezes disclosed in U.S. Patents 3,337,496 and 3,341,469.

In recent years, microemulsions have been developed which are known for their long-term storage stability, i.e. their ability to maintain an apparent single phase over an extended period of time. By way of illustration, oil-in-water microemulsions and water-in-oil microemulsions are extensively employed in the hydraulic fluid field. For example, U.S. Patent 4,337,161 discloses oil-in-water microemulsion whereas U.S. Patent 4,371,447 discloses water-in-oil microemulsions for use in hydraulic fluids, and the like.

Microemulsions, variously referred to as micellar solutions, "soluble oils", swollen micelles, etc., have been extensively discussed in the literature. See, for example, *Microemulsions,* I. D. Robb, Editor, Plenum Press (1981); and, *Microemulsions Theory and Practice*, L. M. Prince, Editor, Academic Press (1977). Microemulsions are typically characterized as clear, bright and transparent (and, hence, apparently homogenoeus and microdispersed), whereas macroemulsions are visibly turbid and two-phase. These characteristics are due to the fact that the particle (i.e. micro-droplet) in a microemulsion is typically smaller than the wave-length of visible light. Although clear to the eye, the presence of the microemulsion particules can be detected by instrumental light-scattering techniques.

As used herein, the term "microemulsion" is used in its broadest sense to encompass faintly turbid or opalescent composition as well as completely clear ones. All of these various types of microemulsions are characterized by excellent ambient temperature storage stability and particle sizes of about less than 0.1 micron. In contrast, macroemulsions are turbid in appearance (e.g., cow's milk) and tend to phase separate upon standing at ambient temperature.

Heretofore, microemulsions in antifreeze, as discussed above, were not known in the art to the best of our knowledge. We speculate that there are at least two reasons for this absence. First, if the antifreeze ingredients are in stable, microemulsion form, there is a problem as to how the corrosion-inhibiting components thereof will be made available to protect the metal surfaces of the car's coolant system. Second, a foaming problem is frequently encountered when using the high levels of emulsifier required to make a stable microemulsion. Such a foaming problem would be considered detrimental to a car's coolant system.

GB—A—962351 refers to the preparation of concentrates containing rolling oils as corrosion inhibitors for automotive cooling systems. The continuous phase of these concentrates consists of a glycol, the rolling oils being dispersed therein with the aid of a non-ionic surfactant. The rolling oils may contain mineral oil as base together with an emulsifier and an ammine soap or fatty acid. This base is emulsified in the glycol with the non-ionic surfactant.

### Object of the invention

It is the object of the present invention to provide an antifreeze composition concentrate characterized by advantageous storage stability and, upon dilution, providing an antifreeze that is microdispersed and apparently homogeneous at ambient (low) temperature and two-phase at automotive engine operating (higher) temperature.

This and other objects will become apparent from a reading of the following detailed specification.

### Summary of the invention

In one aspect, the present invention relates to an oil-in-alcohol microemulsion-containing antifreeze composition concentrate having a discontinuous phase and a continuous phase comprising:

(a) at least one alcohol, selected from the group consisting of ethylene glycol, propylene glycol, diethylene glycol, dipropylene glycol, and mixtures thereof in an amount sufficient to form a continuous phase in the concentrate;

(b) alcohol-insoluble oil particles forming a discontinuous phase in said composition, said particles having a particle size less than about 0.1 micron (preferably less than about 0.05);

(c) at least one surface hydrophobizing compound selected from the group consisting of organic derivatives of the following: phosphate, sulfate, phosphonate, sulfonate, organoammonium and phosphonium salts, amine oxides, phosphine oxides, amphoteric and zwitterionic groups such as betaines and sulfobetaines, and mixtures thereof wherein the organic group of the organic derivatives is selected from the class consisting of the following radicals: alkyl, alkenyl, alkynyl, aryl, all having up to 24 carbon atoms, alkyleneoxy, polyalkyleneoxy, and combinations thereof in an amount of between 0.005 and 1 weight percent based on the weight of the microemulsion; and

(d) at least one emulsifier present in an amount up to an amount sufficient to stabilize the microemulsion in the water containing final antifreeze composition and providing a cloud point from 40°C to 125°C in that composition.

The concentrates of the present invention are used for an antifreeze composition. The antifreeze composition can be made from the composition concentrate by dilution of the concentrate with water and/or alcohol at the use site.

In the following, also methods are described for making the above antifreeze composition, either by direct addition of the oil-in-alcohol microemulsion to water and/or alcohol, or by adding water and/or alcohol to the oil-in-alcohol microemulsion, or by pre-forming the composition concentrate.

## Detailed description of the invention

The compositions of the present invention are characterized by long term concentrate storage stability, as well as a visually single-phase characteristic at ambient (low) temperature and either a visually two-phase or microdispersed characteristic at operating engine (higher) temperatures in the automobile coolant systems (hereinafter also called "cooling systems"). The concentrate storage stability provides good "shelf-life" for the antifreeze concentrate during warehousing, bulk dispensing, and while on store shelves. The microdispersed, apparently homogeneous characteristic at ambient temperature makes it possible for the automotive "cooling system" overflow-tank to contain a uniform composition of all of the utilized antifreeze ingredients, thereby avoiding the congregation problems of the prior art macroemulsion-containing antifreezes when used in a cooling system having an overflow-tank.

The two-phase high temperature characteristic of the antifreezes of the present invention facilitates the coating of the metal surfaces of the automotive coolant system with at least a part of the oil portion of the microemulsion, thereby affording the same excellent corrosion inhibition characteristics for these metal surfaces as was afforded by the prior art macroemulsion-containing antifreezes. However, unlike the latter, the compositions of this invention can be used in the modern automobile coolant systems having a overflow-holding tank while maintaining a uniform distribution of the remaining portion of oil in the antifreeze coolant system, including the holding tank. In accordance with another aspect of this invention, the presence of hydrophobizer in the present composition enhances the affinity of the oil component for the metal surfaces, thereby enabling even the microdispersed oil in the microemulsion to provide corrosion protection.

The oil useful in the present invention can be any material known as an "oil". Thus, any of the numerous substances that are liquid or easily liquifiable by warming and are "practically insoluble" in the continuous phase of the present composition can be employed as the oil phase.

As used herein, the term "practically insoluble" means that the amount of oil present exceeds the ordinary solubility limit of the oil in the continuous phase of the composition at ambient temperature. It is preferred to utilize an oil which is completely insoluble in the continuous alcohol medium. Thus, it is believed that any dissolved oil will generally be less effective in providing the desired corrosion inhibition in comparison to that of the non-dissolved oil.

The oil useful in the present invention may be obtained from a wide variety of sources, including such diverse sources as animal, vegetable, mineral or synthetic manufacture. Moreover, the composition of the oil is also not critical; and it may be composed of such diverse materials as predominantly hydrocarbons, such as mineral and petroleum oils, fatty acid esters, fats, silicone oils, polyalkylene oxides and ester derivatives thereof, or mixtures thereof.

Based upon the above, the term "oil" is intended to include, but is not intended to be limited to, any organic compound which is practically insoluble in alcohol such as ethylene glycol or propylene glycol, or mixtures thereof, but which can be emulsified by the use of at least one surfactant. Such oils include nonpolar and partially polar, aliphatic and aromatic materials, such as mineral oil, paraffin oil, vegetable oil, naphtha oil, petroleum base oil, mixed xylenes, kerosene, mineral spirit, transformer oil, fuel oil, silicone oil, silane esters, synthetic oil, halogenated oils, polypropylene glycols, propylene oxide/ethylene oxide copolymers, propylene oxide/butylene oxide copolymers, ethylene oxide/butylene oxide copolymers, ethylene oxide/propylene oxide/buylene oxide terpolymers, as well as sulfated, sulfonated, phosphated and phosphonated oils, higher alcohols and esters thereof.

It will be generally preferred to select an oil having a vapor pressure of less than 80 mm. of Hg (107 hPa) at 25°C. Utilizing such an oil should minimize, in use, the amount of oil that is lost due to vaporization during the use of the antifreeze.

The amount of oil present in the microemulsions, of the present invention can vary over a wide range,

but is preferably between 0.001 to 5 (more preferably between 0.1 and 3) wt. percent based upon the total weight of the microemulsion. Within the above-specified preferred ranges, the amount of oil used in the microemulsion is dependent upon the particular antifreeze end use required for the microemulsion. Below 0.001 wt. percent, the amount of oil would generally be insufficient to be functional, whereas above 5 weight percent the antifreeze may not satisfy governmental freezing point depression specifications for antifreeze.

As used herein, the term "continuous" or "outer" phase means the alcohol phase that extends through all parts of the microemulsion in a continuous fashion. This outer phase is to be distinguished from the particulate, discontinuous, inner oil phase. As is well recognized, the maximum packing fraction of uniform spheres would make it possible for the outer phase to be as small in amount as 26 vol.% based upon the total volume of both phases (which is about the same on a weight basis). Preferably, the outer alcohol phase comprises at least 50 wt.% (more preferably at least 90 wt.%) based upon the total weight of both phases.

The alcohol is selected from the group consisting of ethylene glycol, diethylene glycol, propylene glycol, dipropylene glycol and mixtures thereof.

As used herein, the term "hydrophobizing agent" denotes a compound that is adsorbed by, or adheres to, the metal surfaces of a cooling system and imparts an affinity between the thus-modified metal surfaces and the oil in the microemulsion. The hydrophobizing agents can accordingly be viewed as dual function compounds.

One end of the molecule attaches or anchors itself to the metal surfaces in the automotive cooling system. To provide long-term effectiveness, the moiety selected should have temperature and chemical stability in the cooling system environment, viz.—should not be easily hydrolyzable or strippable from the surface.

The other end of the molecule of the hydrophobizing agent serves to attract the oil to the thus-coated surface to provide the requisite oil film that imparts the corrosion inhibition characteristics of the antifreeze composition concentrates of this invention. This end of the hydrophobizing agent molecule, typically an organic moiety, should satisfy the following criteria.

First of all, the organic moiety should desirably, and preferably, not result in undue coating of the metal surfaces, be this due to the oil or the hydrophobizer. Excessive build-up may result in less than optimum heat transfer characteristics, and such excessive build-up can be determined by measuring the heat transfer efficiency of the cooling system employed.

Secondly, the organic moiety should be sufficiently compatible with the particular oil so that the desired, protective oil film will result. Adequately compatible materials may be readily selected by ascertaining the contact angle between the oil particle and the coated surface. The contact angle, for suitably compatible materials, should be less than 90°, with lower contact angles being preferred, viz.—the lower the contact angle, the more readily will the desired oil film be provided.

Lastly, when an emulsifier is utilized, the organic moiety thereof should desirably have less affinity for a primary layer of the hydrophobizer adsorbed on the surface than to that of the oil particles, preferably substantially less attractiveness. The reason for this preference is that undue build-up of emulsifier on the coated metal surfaces can interfere with formation of the desired oil film, since the coated surface is thereby rendered hydrophilic, as well as perhaps adversely affecting the stability of the antifreeze composition. This criteria can be satisfied by selecting an organic moiety that is oleophilic in character and lacks homogeneity, as discussed hereinafter.

Accordingly, the organic moiety should preferably be one which lacks homogeneity. As used herein, the term "lacks homogeneity" denotes that the organic moiety has a branched chain, processed side chain, or has a random or non-uniform structure. Non-uniformity may be accomplished, for example, by modifying an alkyl chain by introduction of an alkyleneoxy chain, such as an ethyleneoxy chain. It is believed that employing a homogeneous molecule might result in a tight packing into a crystal bi-layer, thereby impeding heat-transfer and/or oil film formation. Also, bi-layer-pairing of hydrophobizing agent molecules with resultant reduction in metal surface hydrophobicity can result if an excessive amount of hydrophobizer is used.

The hydrophobizing agents are selected from the group consisting of organic derivatives of the following: phosphate, sulfate, phosphonate, sulfonate, ammonium and phosphonium salts, amine oxides, phosphine oxides, amphoteric and zwitterionics such as betaines and sulfobetaines and mixtures thereof wherein the organic group of the organic derivatives is selected from the class consisting of the following radicals: alkyl, alkenyl, alkynyl, aryl, all having up to 24 carbon atoms, alkyleneoxy, polyalkyleneoxy, and combinations thereof.

Generally, the organophosphates useful in the present invention are identified by the structural formula:

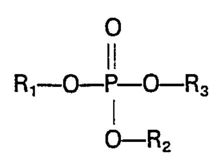

wherein each substituent $R_1$, $R_2$, and $R_3$ is selected from the class consisting of the following radicals: hydrogen; alkyl, aryl, alkenyl and alkynyl, with each of the foregoing having up to 24 carbon atoms; alkyleneoxy, polyalkyleneoxy; phosphate or polyphosphate or their salts; and combinations thereof; with the proviso that at least one of said substituents is an organic radical within the case listed above or combinations thereof.

The preferred organophosphates have the structural formula identified above wherein at least one R substituent consists of an organic radical containing an alkylene oxide polymer or copolymer derivative of the form $R_4O(PO)_x(EO)_y(BO)_z$-, wherein the alkyleneoxide units may be either random or blocked and wherein $x>y\gg z$ and $x+y+z\leq$about 100, and $R_4$ is selected from the class of radicals: hydrogen, alkyl, aryl, alkenyl and alkynyl with the foregoing having up to about 24 carbon atoms; phosphates, polyphosphates and salts thereof, and combinations thereof. These organophosphates preferably have molecular weights below about 10,000 to insure solubility in the antifreeze composition.

Preferred hydrophobizing agents are the organophosphates identified by structural formulae I to III, including the free acids and salts thereof, together with mixtures thereof:

(I) 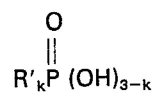

(II) 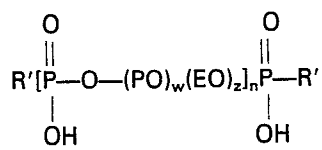

(III) 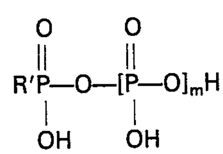

wherein

$R'=[RO(PO)_x(EO)_y]$ wherein R=H or alkyl, aryl, alkylaryl or arylalkyl having up to 24 carbon atoms
PO=Propylene oxide radical
EO=Ethylene oxide radical
x=1 to 100
y=0 to 50
k=1 to 3, with the proviso that k can be 3 if at least one R′ group is removed from the phosphate ester by hydrolysis prior to, or during, use
n=1 to 100
w=0 to 100, with the proviso that if w≥1, than x can be zero
z=0 to 50
m=1 to 10

Within a given formula *x, y, w* or *z* group is the same or different number.

Typical useful classes of organophosphates falling within the groups identified by structural formulae I through III above, are identified as follows:

Example 1:

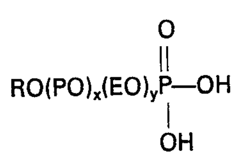

Formula I with k=1

Example 2:

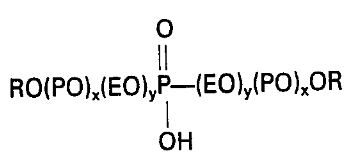

Formula I with k=2

Example 3:

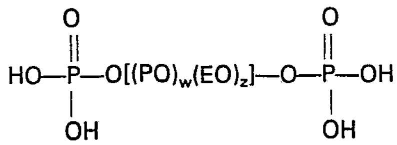

Formula II with
n=1
x=0
y=0
R=H

Example 4:

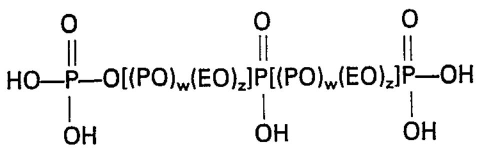

Formula II with
n=2
x=0
y=0
R=H

Example 5:

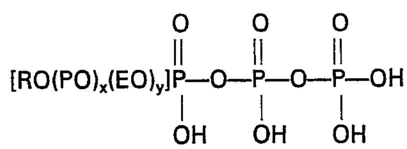

Formula III with m=2

Other less preferred hydrophobizers are organic derivatives of: a solfonate, such as barium alkyl benzene sulfonate; a phosphonate, such as dodecyl phosphonate; a carboxylate, such as a carboxylic acid grafted on an polyalkylene glycol; an organoammonium salts, such as cetyltrimethylammonium chloride, etc.

The amount of hydrophobizing agent, which is dispersed in the present microemulsion composition of the present invention is between 0.005 and 1 wt. percent, based upon the total weight of the microemulsion.

The emulsifiers useful in the present invention include any of a wide range of anionic surfactants, such as the organophosphates, phosphonates, sulfates and sulfonates, as well as salts of fatty acids; cationic surfactants such as organoammonium and phosphonium salts; and non-ionic surfactants such as alkoxylated alcohols, phenols, and amines, and fatty acids, and the like; and amphoteric and zwitterionic groups such as betaines and sulfobetaines, that are well-known in the art. Yet another group of surfactants useful as emulsifiers would include alkyl amine oxides, alkyl phosphine oxides, and the like. Certain inorganic compounds known to be active as emulsifiers, such as soluble borate and phosphate salts, can be employed as emúlsifiers in the present invention.

The above emulsifiers can be used singly or in combination as illustrated in the Examples given below. A combination of at least two surfactkmts is preferred in order to facilitate microemulsification and thereby reduce or minimize the total emulsifier requirement. Also, water in low concentrations is optionally used to enhance the stability of the microemulsions, preferably in an amount of less than 10 weight percent based upon the weight of the microemulsion.

At least one emulsifier employed in the compositions of the present invention provides the antifreeze with a "cloud point", viz.—the antifreeze exhibits reverse temperature solubility. The cloud point for the antifreeze is provided at between 40°C and 125°C, more preferably between 65°C and 125°C, most preferably between 65°C and 90°C. The lower limit of 40°C is well above ambient temperature, whereas the upper limit of 125°C is generally below automotive engine temperatures.

The existence of the cloud point makes it possible for the emulsifier possessing this property to "break" the microemulsion when the microemulsion temperature rises to its cloud point temperature range in the hot portions of an operating engine coolant system, thereby allowing the oil to coat the metal surfaces with which it comes in contact. More particicularly, it is believed that the "breaking" of the microemulsion provides, in effect, a driving force that allows the oil to more readily coat the metal surfaces.

In cooler portions of the engine coolant system, for example, in the overflow-tank, and below the cloud point temperature range of the emulsifier selected, the composition will be in microemulsion or stable dispersed macroemulsion form. Re-microemulsification of the antifreeze composition components in the various portions of the engine coolant system takes place when the engine is not operating, and thus allowed to cool down so that the antifreeze temperature drops below its cloud point.

The preferred emulsifiers for use in the present invention are the non-ionic surfactants. These are preferred because they are generally low foaming and generally provide favorable cloud point temperatures for the antifreeze. Further, non-ionic surfactants are preferred since the use of such surfactants should eliminate or at least minimize any unfavorable reaction or association with the complex system, typically ionic in character, that is present in an automotive cooling system.

In general, the total emulsifier concentration present in the microemulsion (viz.—the total concentration of the emulsifier plus the concentration of any hydrophobizing agent if it serves as an emulsifier) should be between 0.1 times and 100 times (preferably between 0.5 times and 50 times, more preferably between 2 and 10 times) the concentration of oil present in the microemulsion, with the proviso that the total amount of oil plus emulsifier and alcohol cannot exceed 100 wt. percent of the microemulsion. If the surfactant concentration is below about 0.1 times the oil concentration, the microemulsion is likely to be unstable. If the surfactant concentration is above about 100 times the oil concentration, it is likely that resulting composition will not be economically feasible from a commercial standpoint.

The antifreeze concentrate of the invention preferably has a pH of between 5.5 and 11 in order to provide a working antifreeze pH of between 8 and 11. However, the particular pH selected for the working antifreeze may be varied as desired. It should, of course, be appreciated that the working pH selected may affect the adherency or substantivity of the hydrophobizer coating on the metal surfaces. The efficacy of the particular working pH for the hydrophobizer selected may be readily ascertained.

Buffers can be included in the concentrate to provide this pH range, and a wide variety of buffers are known and have been used in antifreeze compositions. As representative examples, suitable buffers include, but are not limited to, borates, phosphates, dibasic acids, such as sebacates and benzoates, hydroxy benzoates, carbonates, bicarbonates, or mixtures thereof. If used, the buffer is preferably employed in an amount of between 0.1 and 5 wt. percent based upon the weight of the concentrate. Below about 0.1 wt. percent, the buffer would not be expected to be effective, whereas above about 5 wt. percent, the amount of buffer is expected to be too costly for a commercial antifreeze.

Other optional additives may be employed in minor amounts of less than 50 wt. percent based on the weight of the concentrate. Typical optional additives would include, for example, known corrosion inhibitors for aluminum or other metals in admixture with the oils and the hydrophobizing agents of the present invention such as, for example, molybdates, sebacates, carbonates, silicates, alkali metal nitrates, alkali metal nitrites, diisopropylamine nitrite, dicyclohexylamine nitrate, tolyltriazole, mercaptobenzothiazole, benzotriazole, and the like, or mixtures thereof. If one or more of the known inhibitors are employed together with the inhibitors of the present invention, the sum total of all inhibitors should be used in an "inhibitory effective amount", i.e., an amount sufficient to provide a measurable amount of corrosion inhibition with respect to the metal (e.g. copper, steel, brass, aluminum, cast iron, solder etc.) surfaces to be protected as compared to the antifreeze without these inhibitors.

In accordance with one aspect of this invention, the type of optional corrosion inhibitor that may be employed is much broader than can be used in conventional antifreeze compositions due to the fact that, pursuant to this invention, oil-soluble inhibitors may be readily utilized. Such inhibitors may be dissolved in the oil, for example, prior to forming the microemulsion. In this fashion, the oil particles are expected to serve as an advantageous carrier medium to transport such corrosion inhibitors to the metal surfaces. These oil-soluble corrosion inhibitors are preferred in the practice of this invention.

In similar fashion, the oil phase can be employed to serve as a carrier for other useful types of additives. As illustrative examples, oil-soluble biocides, oxidation inhibitors, taste repellants, and the like may be advantageously utilized.

Other typical optional additives that may be used include wetting agents and surfactants such as, for example, known ionic and non-ionic surfactants such as the poly(oxyalkylene) adducts of fatty alcohols; defoamers and/or lubricants such as the well-known polysiloxanes and the polyoxyalkylene glycols, oil-soluble inhibitors, such as zinc dithiophosphates and zinc dithiocarbamates, lubricants such as silicone pump lubricants, as well as any other minor ingredients known in the art that do not adversely affect the antifreeze characteristics sought to be achieved.

One minor additive that is particularly preferred is a defoamer in view of the substantial quantities of emulsifier often employed in the concentrate of the present invention. More particularly, the quantities of emulsifier utilized to provide the microemulsion with the desired stability can cause undesirable foaming in the cooling system. If such foaming occurs, this may be satisfactorily minimized by utilizing a defoaming agent.

A variety of such defoamers are known and may be used. A particularly preferred defoamer is commercially available under the trademark "SAG" (a silicone defoamer product of Union Carbide) and is preferably employed in amounts of less than 0.5 wt. percent based upon the weight of the microemulsion in the antifreeze. An appropriate defoamer should meet the following criteria (a) good storage stability in

the antifreeze concentrate at ambient temperature and, (b) it will not adversely affect the action of the hydrophobizer or emulsifier.

The microemulsions of the present invention can be prepared by any known method such as, for example, by mixing the individual components together for a short period of time. Another procedure for preparing microemulsions is to heat a mixture of the individual ingredients, while stirring, and then allow the resulting microemulsion to cool to room temperature. The sequence of addition of the oil, alcohol, and surfactant to the microemulsion mixture is not critical; and the order most convenient may be selected. Procedures for preparing microemulsions are well-known in the art and are more fully described, for example, in "Microemulsion Theory and Practice", Leon M. Prince, Editor (Academic Press, Inc. 1977), the disclosure of which is incorporated herein by reference.

If desired, the antifreeze concentrate of this invention may be utilized in combination with other antifreeze concentrates. For example, the antifreeze concentrates of the present invention may be utilized with state-of-the-art antifreeze compositions. United States Patent 3,337,496 is representative of this type of technology.

The following Examples are intended to illustrate, but in no way limit, the scope of the present invention.

Example 1

A. Preparation of microemulsion-containing antifreeze concentrate and working antifreeze solutions

This Example illustrates the preparation and use of an antifreeze concentrate of this invention. The inhibitory effect of such concentrate is compared to a control.

An oil-in-alcohol microemulsion was prepared by mixing a formulation consisting of 0.2 wt.% paraffin oil, 0.2 wt.% TERGITOL NP-4 (a nonylphenol ethoxylate surfactant of Union Carbide Corporation having 4 average ethoxy units per molecule), and 1.67 wt.% TERGITOI 25-L-7 (a surfactant product of Union Carbide comprising ethoxylates of linear alcohols having an average number of carbons between 12 and 15 and having an average of 7 ethoxy groups per molecule) and 0.5 wt. percent of GAFAC RB-400, an ethoxylated alkyl phosphate of GAF Corporation, together in a borate-containing ethylene glycol base fluid (hereinafter Base Fluid A). Base Fluid A (hereinafter "Test Solution #2") had the following composition:

Base fluid A

| Component | wt. % |
|---|---|
| ethylene glycol | 98.26 |
| sodium tetraborate pentahydrate | 1.47 |
| sodium hydroxide (50% aq.) | 0.27 |
| Total wt.% | 100.0 |

The resulting composition was clear and bright in appearance. This microemulsion concentrate was diluted to make a working antifreeze solution (identified as "Test Solution #1" in Table I) by mixing 33 wt.% of concentrate with 67 wt.% of "corrosive water" (deionized water containing 100 ppm. each of $SO_4^{=}$, $HCO_3^-$ and $Cl^-$, all added as the Na salts). The antifreeze solution was clear and bright in appareance.

B. Laboratory disc heat flux test: method, apparatus and results

A standard test method used in the antifreeze industry was employed to determine the inhibitory effect of the formulated composition of the present invention with respect to heat rejecting aluminum surfaces. This test method is described in *Corrosion*, 15, 257t at 258t (1959) "Laboratory Methods for Determining Corrosion Rates under Heat Flux Conditions", and also in an ASTM publication entitled, "Engine Coolant Testing: State of the Art," a symposium sponsored by ASTM Committee D-15, at pages 17—19 (Printed, May 1980), both incorporated herein by reference.

The following summarizes the test equipment and procedure used:

The apparatus consisted of a one liter flask, fitted with a condenser, a thermometer, a cold finger, a temperature controller, a 1 1/2 inch (3.8 cm) diameter×1/4 inch (0.64 cm) thick No. 319 aluminum casting alloy (herein "the aluminum disc"), and a soldering iron heat source.

The apparatus was charged with 900 ml. of the working antifreeze solution and heated to effect boiling at the aluminum disc surface and to maintain a solution temperature of about 80°C. The microemulsion in the antifreeze solution had a cloud point below 80°C. The test duration was 168 hours. The weight loss of aluminum from the aluminum disc was determined and used as a measure of corrosion inhibitor effectiveness expressed as % inhibition.

The results are given in Table I:

TABLE I

| Test solution # | % Inhibition | Wt. Loss |
|---|---|---|
| 1 | 95% | 3 mg. |
| 2 (control) | 0% | 60 mg. |

The results presented in Table I above show very good corrosion inhibition associated with Test Solution #1 of the present invention, as compared to control Test Solution #2 (BASE FLUID only) (95% versus 0% inhibition, respectively).

Example 2

This Example illustrates the effectiveness of another microemulsion antifreeze concentrate of this invention, which concentrate does not have a cloud point.

The above disk test was repeated on a formulation of this invention consisting of 0.5 wt.% of a single surfactant, GAFAC RB-400, and 0.1% transformer oil (i.e., refined mineral oil having a viscosity of 57 S.S.U. at 100°F (38°C), added as transformer oil #600, a product of Texaco Corp.) in the above-described BASE FLUID A, and then diluted with corrosive water as described in Example 1 above.

This formulation provided 95% inhibition on the disk test. In contrast, analogous compositions without transformer oil or without transformer oil and RB-400 (control) provided 0% inhibition.

Example 3

Glassware corrosion test of microemulsion-containing antifreeze on metal specimens

This example shows the corrosion-inhibiting characteristics achieved using yet another antifreeze concentrate of the present invention having a conventional, supplemental corrosion inhibitor.

An oil-in-alcohol working antifreeze solution was prepared using the following formulation: 0.067 wt.% paraffin oil, 0.067 wt.% "TERGITOL NP4", 0.1 wt.% "TERGITOL 25-L-7", 0.04 wt.% "GAFAC RB400", 31.95 wt.% ethylene glycol, 1.26 wt.% sodium metaborate octa hydrate, 0.12 wt.% sodium mercaptobenzothiazole and 66.4 wt.% corrosive water containing 100 ppm $SO_4^{=}$, $HCO_3^-$, $Cl^-$ in Na salt. This formulation appeared opalescent.

The resulting working antifreeze was tested, using the ASTM Glassware test procedure (ASTM-D-1384). This is a beaker test procedure whereby metal specimens are immersed in 180°F (82.2°C) heated antifreeze for 336 hours, and metal weight lost due to corrosion during immersion is measured. As a control, a borate-containing ethylene glycol base fluid without oil and surfactant, but containing the other specified ingredients was employed.

The results are given in Table II (the values being set forth being an average of 3 samples):

TABLE II—ASTM-D-1384
(mgs. wt. loss per 1 inch×2 inch (2.54 cm×5.08 cm) specimen)

| | Cast | | | | | | Additional specimen |
|---|---|---|---|---|---|---|---|
| | Al | Fe | Steel | Br | ASTM solder | Cu | high-lead solder |
| Microemulsion | 19 | 1 | 2 | 7 | 6 | 6 | 16 |
| Control | 63 | 1 | 3 | 7 | 5 | 8 | 82 |

The above results show that the microemulsion composition provides improved aluminum and high-lead solder corrosion inhibition, as compared to the control borate buffer composition. Results for ASTM solder, copper, brass and steel are considered to be comparable.

Example 4

Preparation of additional microemulsion-containing antifreezes of the present invention

This Example describes the preparation of other antifreeze concentrates pursuant to the present invention, utilizing various oils and hydrophobizers.

Table III below provides data on various microemulsions which were prepared. These microemulsions are suitable for use in the antifreeze concentrates of the present invention.

Additional microemulsion-containing antifreezes were made using Base Fluid A (identified in Example 1) to which was added the various oils and hydrophobizers identified in Table III. Examination of each of the mixtures described in Table III showed them to have the characteristics of a microemulsion.

TABLE III
Various oils in microemulsion-containing antifreezes

| Oil | | Hydrophobizer | | Base fluid A | Surfactant 1 | | Surfactant 2 | |
|---|---|---|---|---|---|---|---|---|
| Type | Amount in grams | Type | Amount in grams | Amount in grams | Type | Amount in grams | Type | Amount in grams |
| Corn oil | 1 | None | — | 20 | Tergitol NP4* | 1 | Tergitol 25L7* | 4.4 |
| Mineral oil** | 0.075 | Barium sulfonate** | 0.02 | 20 | Tergitol NP4* | 0.1 | Tergitol 25L7* | 1.1 |
| Paraffin oil | 0.1 | Grafted UCON fluid*** | 0.1 | 20 | Tergitol NP4* | 0.1 | Tergitol 25L7* | 2 |
| Transformer oil | 0.1 | GAFAC RB 400* | 1.1 | 20.7 | Antara LE 500**** | 0.1 | — | — |
| Paraffin oil | 1 | None | — | 13.2 | Tergitol NP4* | 1 | Tergitol 25L7* | 4.8 |

* Defined in Example 1A above.
** Added as 0.1 wt.% Bryton oil which contains 20% Ba alkyl benzene sulfonate, 5.2% $BaCO_3$ and 74.8% mineral oil.
*** Union Carbide's "UCON 50HB170" polyoxyalkylene polymer grafted with 10% acrylic acid
**** A polyethyleneoxy-based phosphate ester with aromatic hydrophobe, a product of GAF Corporation.

Each of the microemulsions identified in Table III above are clear and stable compositions. This Example demonstrates that microemulsion-containing antifreeze compositions can be made using various oils (corn oil, mineral oil, paraffin oil, transformer oil). With regard to the corn oil, a microemulsoin was made; and, a hydrophobizer can be provided, as shown for the other oils, to make the corn oil useful within the scope of the present invention.

Example 5

Car tests on microemulsion containing antifreeze with various cloud points

This Example illustrates the use of microemulsion antifreeze concentrates of this invention in an aumomobile cooling system.

A 1982 Chevrolet Citation automobile, equipped with a V-6 engine and having a 10.6 liter nominal cooling system and a thermostat set at 195°F, (87.8°C) was tested as follows. The air coolant system was filled with a 50:50 volume mixture of antifreeze Concentrate Y and tap water, where antifreeze Concentrate Y is defined in Table IV below:

TABLE IV
Antifreeze concentrate Y

| Components of concentrate Y | Wt.% |
|---|---|
| Ethylene glycol | 92.2693 |
| Transformer oil | 0.9975 |
| Tergitol NP-4* | 0.9975 |
| Tergitol 25-L-12* | 3.7406 |
| Water, distilled | 1.9950 |
| | 100.0000 |

* defined in Example 1A above.

This antifreeze concentrate exhibited a cloud point of about 77°C.

The car containing the above aqueous antifreeze was tested over an 11-day period by cycling the engine 39 times (i.e., starting the engine, running it for several minutes, then cooling it) and driving the car over 303 miles (487.5 km). The original 50 percent aqueous antifreeze had an oil-containing phase of 12.7 volume percent.

After 24 engine on-off cycles, the oil-containing phase in the overflow-tank of the coolant system was 12.5 volume percent. After 32 cycles, the overflow-tank had an oil phase content of 10.8 volume percent, as compared to an oil phase content of 10.5 volume percent in the bulk engine fluid. After 39 cycles, the overflow-tank had an oil-containing phase of 10.8 volume percent, whereas the oil phase content of the bulk engine fluid was 10.6 volume percent.

The above test results indicate clearly that an oil content equilibrium between the bulk engine fluid and the overflow-tank was reached after a number of on-off cycles of the engine and that a microemulsion-containing antifreeze having a cloud point of 77°C did not aggregate the oil phase in either the main coolant system or in the overflow-tank. Re-microemulsification of the antifreeze took place in the cooling system after the antifreeze returned to below its cloud point.

A similar car test was conducted using an antifjeeze composition having a cloud point of about 60°C. Complete re-microemulsification of this antifreeze in the coolant system did not take place when the system was cooled down. Also, the oil distribution in the antifreeze was not uniform in the various parts of the system on cool down. However, while not optimum, the performance of this composition would be considered to be adequate when employed in an automobile cooling system having no overflow-tank, such as the Ford Mustang.

In summary, this Example illustrates the advantage of selecting a microemulsion with a cloud point of at least about 65°C when using a cooling system with an overflow-tank, and at least 40°C when no overflow-tank is used, with the compositions of the present invention in accordance with the method of use described in this Example.

Example 6

Preparation and testing of an antifreeze containing an oil-soluble corrosion inhibitor

This Example shows the corrosion-inhibiting performance of yet another microemulsion antifreeze concentrate of the present invention.

The disk test (described in Example 1) was repeated on a formulation of this invention consisting of 0.59 wt.% of a solution of 10 wt.% of an oil-soluble corrosion inhibitor, namely AMINE O, an oleylimodazoline product of Ciba-Geigy, in paraffin oil, 0.59 wt.% TERGITOL NP-4, 0.89 wt.% TERGITOL 25-L-7, 0.35 wt.% GAFAC RB-400 and 97.5 wt.% BASE FLUID A, described above, diluted with "corrosive" water as also described in Example 1. This formulation provided 100% inhibition on the disk test. In contrast, a control example using BASE FLUID A provides 0% inhibition.

**Claims**

1. An oil-in-alcohol microemulsion-containing antifreeze composition concentrate having a discontinuous phase and a continuous phase comprising:

(a) at least one alcohol selected from the group consisting of ethylene glycol, propylene glycol, diethylene glycol, dipropylene glycol, and mixtures thereof in an amount sufficient to form a continuous phase in the concentrate;

(b) alcohol-insoluble oil particles forming a discontinuous phase in said composition, said particles having a particle size less than about 0.1 micron;

(c) at least one hydrophobizing compound selected from the group consisting of organic derivatives of the following: phosphate, sulfate, phosphonate, sulfonate, ammonium and phosphonium salts, amine oxides, phosphine oxides, amphoteric and zwitterionic groups such as betaines and sulfobetaines, and mixtures thereof wherein the organic group of the organic derivatives is selected from the class consisting of the following radicals: alkyl, alkenyl, alkynyl, aryl, all having up to 24 carbon atoms, alkyleneoxy, polyalkyleneoxy, and combinations thereof in an amount of between 0.005 and 1 weight percent based on the weight of the microemulsion; and

(d) at least one emulsifier present in an amount sufficient to stabilize the microemulsion in the water containing final antifreeze composition, and providing a cloud point from 40°C to 125°C in that composition.

2. The concentrate of Claim 1 wherein said oil particles are present in an amount of between 0.001 and 5 weight percent based on the total weight of the microemulsion, and wherein said emulsifier is present in an amount of between 0.1 times and 100 times the total weight of said oil particles in the microemulsion, and wherein said alcohol is present in an amount of at least 50 weight percent based on the weight of the concentrate, and wherein the hydrophobizer is present in an amount of between 0.001 and 30 weight percent based on the weight of the microemulsion, with the proviso that the total weight of the concentrate not exceed 100 weight percent.

3. The concentrate of Claims 1—2 wherein component (c) is a propylene oxide or ethylene oxide/propylene oxide-containing organophosphate ester.

4. The concentrate of Claim 3 wherein said organophosphate ester has an average molecular weight below 10,000.

5. The concentrate of Claim 4 wherein said organophosphate ester has the structural formula:

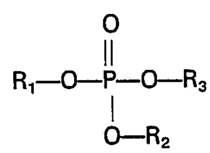

wherein each substituent $R_1$, $R_2$, and $R_3$ is selected from the class consisting of the following radicals: hydrogen; alkyl, aryl, alkenyl and alkynyl, with each of the foregoing having up to 24 carbon atoms; alkyleneoxy, polyalkyleneoxy; phosphate or polyphosphate or their salts; and combinations thereof; with the proviso that at least one of said substituents is an organic radical within the class listed above or combinations thereof.

6. The concentrate of Claims 1—5 having the pH of between 5.5 and 11.

7. The concentrate of Claims 1—5 having a pH of between 8 and 11.

8. The concentrate of Claims 1—7 which additionally contains silicate in a corrosion-inhibiting effective amount.

9. The concentrate of Claims 1—8 which additionally contains an antifoam additive in an amount effective to minimize foaming of said concentrate.

10. The concentrate of Claims 1—9 wherein said oil particles are present in an amount of between 0.1 and 3 weight percent based on the total weight of the microemulsion, and wherein said emulsifier is present in an amount of between 0.5 times and 50 times the total weight of said oil particles in the microemulsion, and wherein said alcohol is present in an amount of at least 90 weight percent based on the weight of the concentrate, with the proviso that the total weight of the concentrate not exceed 100 weight percent.

**Patentansprüche**

1. Eine Öl-in-Alkohol-Mikroemulsion enthaltende Frostschutzmittel-Konzentratzusammensetzung mit einer diskontinuierlichen Phase und einer kontinuierlichen Phase, welche umfaßt:

(a) wenigstens einen aus der aus Ethylenglykol, Propylenglykol, Diethylenglykol, Dipropylenglykol und Mischungen davon bestehenden Gruppe ausgewählten Alkohol in einer Menge, die ausreicht, eine kontinuierliche Phase in dem Konzentrat zu bilden;

(b) Alkohol-unlösliche Ölteilchen, die eine diskontinuierliche Phase in der Zusammensetzung ausbilden, wobei die Teilchen eine Teilchengröße von weniger als etwa 0,1 µm haben;

(c) wenigstens eine hydrophobisierende Verbindung, die aus der aus organischen Derivaten der folgenden bestehenden Gruppe ausgewählt ist: Phosphat, Sulfat, Phosphonat, Sulfonat, Ammonium- und Phosphoniumsalz, Aminoxide, Phosphinoxide, amphotere und zwitterionische Gruppen, wie Betaine und Sulfobetaine, sowie Mischungen davon, worin die organische Gruppe der organischen Derivate aus der aus den folgenden Resten bestehenden Klasse ausgewählt ist: Alkyl, Alkenyl, Alkinyl, Aryl, alle mit bis zu 24 Kohlenstoffatomen, Alkylenoxy, Polyalkylenoxy und Kombinationen davon, in einer Menge zwischen 0,005 und 1 Gew.-%, bezogen auf das Gewicht der Mikroemulsion; und

(d) wenigstens einen Emulgator, der in einer Menge vorhanden ist, die ausreicht, die Mikroemulsion in der wasserhaltigen End-Frostschutzmittelzusammensetzung zu stabilisieren und einen Trübungspunkt von 40°C bis 125°C in der Zusammensetzung bereitzustellen.

2. Konzentrat nach Anspruch 1, worin die Ölteilchen in einer Menge zwischen 0,001 und 5 Gew.-%, bezogen auf das Gesamtgewicht der Mikroemulsion, vorhanden sind und worin der Emulgator in einer Menge zwischen dem 0,1-fachen und 100-fachen des Gesamtgewichts der Ölteilchen in der Mikroemulsion vorhanden ist, und worin der Alkohol in einer Menge von wenigstens 50 Gew.-%, bezogen auf das Gewicht des Konzentrats, vorhanden ist, und worin der Hydrophobisierer in einer Menge zwischen 0,001 und 30 Gew.-%, bezogen auf das Gewicht der Mikroemulsion, vorhanden ist, mit der Maßgabe, daß das Gesamtgewicht des Konzentrats 100 Gew.% nicht überschreitet.

3. Konzentrat nach Anspruch 1 bis 2, worin die Komponente (c) ein Propylenoxid- oder Ethylenoxid/Propylenoxid-haltiger Organophosphatester ist.

4. Konzentrat nach Anspruch 3, worin der Organophosphatester ein durchschnittliches Molekulargewicht unter 10 000 hat.

5. Konzentrat nach Anspruch 4, worin der Organophosphatester die Strukturformel hat:

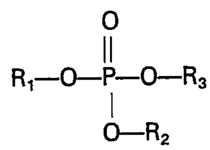

worin jeder Substituent $R_1$, $R_2$ und $R_3$ aus der aus den folgenden Resten bestehenden Klasse ausgewählt ist: Wasserstoff; Alkyl, Aryl, Alkenyl und Alkinyl, wobei jede der vorgenannten Gruppen bis zu 24 Kohlenstoffatome hat; Alklenoxy, Polyalkylenoxy; Phosphat oder Polyphosphat oder ihren Salzen; und Kombinationen davon; mit der Maßgabe, daß wenigstens einer der Substituenten ein organischer Rest aus der oben aufgeführten Klasse oder eine Kombination davon ist.

6. Konzentrat nach Anspruch 1 bis 5 mit einem pH zwischen 5,5 und 11.

7. Konzentrat nach Anspruch 1 bis 5 mit einem pH zwischen 8 und 11.

8. Konzentrat nach Anspruch 1 bis 7, welches zusätzlich Silicat in einer wirksam vor Korrosion schützenden Menge enthält.

9. Konzentrat nach Anspruch 1 bis 8, welches zusätzlich einen Antischaumzusatz in einer Menge enthält, die das Schäumen des Konzentrats wirksam minimiert.

10. Konzentrat nach Anspruch 1 bis 9, worin die Ölteilchen in einer Menge zwischen 0,1 und 3 Gew.-%, bezogen auf das Gesamtgewicht der Mikroemulsion, vorhanden sind, und worin der Emulgator in einer Menge zwischen dem 0,5-fachen und fem 50-fachen des Gesamtgewichts der Ölteilchen in der Mikroemulsion vorhanden ist, und worin der Alkohol in einer Menge von wenigstens 90 Gew.-%, bezogen auf das Gewicht des Konzentrats, vorhanden ist, mit der Maßgabe, daß das Gesamtgewicht des Konzentrats 100 Gew.-% nicht übersteigt.

**Revendications**

1. Concentré d'une composition d'anti-gel contenant une microémulsion huile-dans-alcool et comportant une phase discontinue et une phase continue comprenant:

(a) au moins un alcool choisi parmi l'éthylène-glycol, le propylène-glycol, le diéthylène-glycol, le dipropylène-glycol et leurs mélanges en une proportion suffisante pour former une phase continue dans le concentré;

(b) des particules d'huile insoluble dans l'alcool formant une phase discontinue dans ladite composition, lesdites particules ayant une granulométrie inférieure à environ 0,1 micron;

(c) au moins un composé à action hydrophobe choisi parmi les dérivés organiques des composés suivants: sels de phosphate, sulfate, phosphonate, sulfonate, ammonium et phosphonium, oxydes d'amines, oxydes de phosphines, groupes amphotères et zwitterioniques tels que les bétaïnes et les sulfobétaïnes et leurs mélanges, dans lequel le groupe organique des dérivés organiques est choisi parmis les radicaux suivants: alkyle, alcényle, alkynyle, aryle, contenant tous jusqu'à 24 atomes de carbone, alkylène-oxy, polyalkylène-oxy et leurs combinaisons en une proportion comprise entre 0,005 et 1% par rapport au poids de la microémulsion; et

(d) au moins un émulsifiant présent en une quantité suffisante pour stabiliser la microémulsion dans

l'eau contenant la composition anti-gel finale et assurant un point de trouble compris entre 40 et 125°C dans cette composition.

2. Concentré selon la revendication 1, dans lequel lesdites particules d'huile sont présentes à raison de 0,001 à 5% par rapport au poids total de la microémulsion et dans lequel ledit émulsifiant est présent en une quantité comprise entre 0,1 et 100 fois le poids total desdites particules d'huile dans la microémulsion, et dans lequel ledit alcool est présent en une quantité d'au moins 50% par rapport au poids du concenré et dans lequel l'agent à action hydrophobe est présent à raison de 0,001 à 30% par rapport au poids de la microémulsion, à la condition que le poids total du concentré ne dépasse pas 100% en poids.

3. Concentré selon les revendications 1 et 2, dans lequel le composant (c) est l'oxyde de propylène ou un organophosphate contenant l'oxyde d'éthylène/oxyde de propylène.

4. Concentré selon la revendication 3, dans lequel ledit organophosphate présente une masse moléculaire moyenne inférieure à 10.000.

5. Concentré selon la revendication 4, dans lequel ledit organophosphate présente la formule structurale:

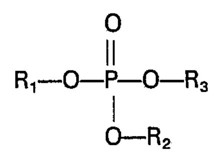

dans laquelle chaque substituant $R_1$, $R_2$ et $R_3$ est choisi parmi les radicaux suivants: hydrogène; alkyle, aryle, alcényle et alkynyle, chacun de ceux-ci ayant jusqu'à 24 atomes de carbone; alkylène-oxy, polyalkylène-oxy; phosphate ou polyphosphate ou leurs sels; et des combinaisons de ceux-ci; à la condition qu'au moins l'un desdits substituants soit un radical organique parmi ceux énumérés ci-dessus ou leurs combinaisons.

6. Concentré selon les revendications 1 à 5, ayant un pH compris entre 5,5 et 11.

7. Concentré selon les revendications 1 à 5, ayant un pH compris entre 8 et 11.

8. Concentré selon les revendications 1 à 7, qui contient en outre un silicate en une proportion efficace pour inhiber la corrosion.

9. Concentré selon les revendications 1 à 8, qui contient en outre un additif anti-moussage en une quantité efficace pour réduire au minimum le moussage dudit concentré.

10. Concentré selon les revendications 1 à 9, dans lequel lesdites particules d'huile sont présentes à raison de 0,1 à 3% par rapport au poids total de la micro-émulsion, et dans lequel ledit émulsifiant est présent à raison de 0,5 à 50 fois le poids total desdites particules d'huile dans la microémulsion, et dans lequel ledit alcool est présent en une quantité d'au moins 90% par rapport au poids du concentré, à la condition que le poids total du concentré ne dépasse pas 100% en poids.